# EUROPEAN PATENT APPLICATION

(11) **EP 4 343 546 A1**
(43) Date of publication of application: **27.03.2024**
(21) Application number: 22197638.4
(22) Date of filing: 26.09.2022
(51) Int. Cl.: G06F 9/455, G06F 8/60, G06F 8/71

(54) **METHOD AND SYSTEM FOR DEPLOYING A CONTAINERIZED APPLICATION TO AN INDUSTRIAL CONTROL SYSTEM**

(71) Applicant: Siemens Aktiengesellschaft, 80333 München (DE)
(72) Inventor: Knierim, Christian, 81373 München (DE)
(74) Representative: Siemens Patent Attorneys

(57) **Abstract**

A method for deploying a containerized application (6) to an industrial control system (105) comprises: a build step comprising obtaining a build specification (1), rule-based validating the build specification (1) and determining a build validation result (3), and building a respective build artifact (2) according to the build specification (1); a deployment preparation step comprising obtaining the deployment specification (4), the number of build artifacts (20) and the build validation results (30), rule-based validating the deployment specification (4) in consideration of the build artifacts (20) and the build validation results (30) and determining a deployment validation result (5); and a deployment step comprising obtaining the build artifacts (20) the deployment specification (4), deploying the build artifacts (20) on the industrial control system (105) according thereto, while implementing a number of security-related measures based on the deployment validation result (5).

Security is improved in an efficient manner.

## Description

The present invention relates to the field of agile software development of containerized applications for industrial control systems, and more particularly to a method and a system for deploying a containerized application to an industrial control system.

One example for an industrial control system is an edge device. Edge computing is a distributed information technology architecture in which data is processed as near to the data originating sources in an industrial plant as possible. An edge device may perform analytics, provide performance data and perform predictive maintenance, for example.

The Docker container runtime environment is one example of a technology for containerizing applications. A container image, such as a Docker image, provides a containerized software functionality. A container image is built based on a build specification, such as a Dockerfile, which specifies actions to be taken to build the container image from input digital artifacts, such as other container images, binary software packages, configuration files and the like.

A plurality of container images may be deployed in a containerized runtime environment. Actions to be taken for deployment are described in a deployment specification, such as a Docker-compose file. The deployment specification lists container images to be deployed, resources to be provided, interactions between the Docker images, network topologies, and the like.

A continuous integration continuous development pipeline (CI/CD pipeline) may span multiple build steps, with Docker images at one stage incorporating container images or other digital artifacts created at a previous stage. A plurality of parties may provide input to such a CI/CD pipeline. For example, generic container images may be provided in a repository from an industry 4.0 service provider. Specific docker images may then be customized by the one or more operators of the industrial plant. Therein, recourse may be made to digital artifacts that are available publicly on the Internet or the like.

An orchestration operator that deploys the containerized application to an industrial control system needs to take security measures in order to ensure the information security of the industrial control system and the safety of the controlled industrial plant. Security measures may include prescribing certain firewall settings, ensuring the absence of known security breaches in the artifacts that constitute the containerized application, running intrusion detection systems, restricting process privileges and the like. If an important security measure is omitted, the security of the industrial control system may be compromised. On the other hand, some of the abovementioned security measures may be unnecessary and cause unnecessary load, for example if the container images themselves employ proper security measures, conform to certain security standards or the like.

It is one object of the present invention to efficiently improve the security of an industrial control system on which a containerized application is deployed.

Accordingly, a method for deploying a containerized application constituted by a number of build artifacts and a deployment specification comprising deployment information relating to the number of build artifacts to an industrial control system comprises: a build step carried out for each of the number of build artifacts and comprising obtaining a build specification and building the build artifact according to the obtained build specification; and a deployment step comprising obtaining the deployment specification and the number of build artifacts and deploying the number of build artifacts in a containerized runtime environment of the industrial control system according to the deployment specification. Herein, the respective build step is carried out by a trusted device and further comprises validating the build specification according to a build ruleset and determining a build validation result. The method further comprises a deployment preparation step that is carried out by a trusted device and comprises obtaining the deployment specification, obtaining the number of build artifacts and securely obtaining the build validation results, validating the deployment specification in consideration of the build artifacts and the build validation results according to a deployment preparation ruleset and determining a deployment validation result. Furthermore, the deployment step further comprises implementing a number of security-related measures during deployment based on the deployment validation result.

With the proposed method, each build step of building a respective build artifact is performed by a trusted device and comprises validating the build specification against a build ruleset. The build validation result is made available to a trusted device that performs a subsequent step, such as another build step or a deployment preparation step. In the deployment preparation step, the deployment specification is validated in consideration of the build validation results of the number of build artifacts that form the containerized application. Finally, during deployment, security-related measures are implemented dependent on said deployment validation result. In this way, even when there is limited trust in the individual entities or developers that use the trusted systems to perform the build and deployment preparation steps, the security-related measures that are taken at deployment can be tailored to validated properties of the specific build artifacts and the specific deployment specification of the containerized application to be deployed. An end-to-end validation of all steps of a CI/CD pipeline starting from the first digital artifact up to the deployed containerized application is made possible. Thus, the security of the containerized runtime environment can be improved in an efficient manner. Thus, also the security of the industrial control system and the security and safety of the industrial plant controlled by the industrial control system can be improved in an efficient manner.

In the present description, the term "a number of" generally means a number N of one (N=1) or more (N>1). That is, "a number of" comprises both the case of a singularity and the case of a plurality, as long as this does not lead to contradictions with the context.

In particular, a build artifact is a digital artifact that is created by performing the building step. A build specification specifies actions to be taken to perform the building step. Such actions may comprise combining a number of digital artifacts, such as other build artifacts, artifacts resulting from compiling, configuration files, scripts and the like, to form the build artifact. Such actions may also comprise causing compilation of source code using specific compiler flags to create a digital artifact to form part of the build artifact to be built. A Docker file is one example of a build specification. A Docker image is one example of a build artifact.

In particular, a deployment specification specifies actions to be taken to deploy the number of build artifacts in the containerized runtime environment such that the containerized application is formed and executed therein. For example, the deployment specification may list the build artifacts to be deployed, the resources to be provided to each of the build artifacts, interactions between the build artifacts, network topologies, and the like. A Docker-compose file is one example of a deployment specification. A Kubernetes Yaml file is a further example of a deployment specification.

In particular, "obtaining" refers in the broadest sense to the step of making available the information that is obtained to the respective step executed on the respective (trusted) devices. For example, obtaining may refer to receiving the respective information via an API call, such as a REST API, via e-mail, via HTTPS upload, via transmission to a specific TCP or UDP port, via reading a file from a shared file system, and the like. Obtaining may refer to an operation of actively fetching the respective information. However, more particularly, obtaining may refer to an operation of passively receiving/accepting the respective information in response to an operation that is initiated by an external entity, such as a client computer used by a developer as and when the developer decides to cause the trusted device to perform the build step or the deployment preparation step, for example. That is, different build steps for different of the build artifacts, the deployment preparation step, and the deployment step may be carried out at vastly different points in time, each initiated by different client computers operated by different developers, orchestration operators, and the like.

In particular, the term "trusted" in "trusted devices" refers to a device that cannot be tampered with or are safeguarded against tampering from devices that are external to the trusted devices and use the trusted devices to perform the build and deployment steps. In particular, a software developer who supplies a build specification or a deployment specification to be obtained by one of the trusted devices has advantageously no influence on the operations of validating the build specifications or the deployment specification, cannot modify the build ruleset or the deployment preparation ruleset, and the like. The trusted devices may be separate hardware devices or may be portions of a same device. The respective trusted device may be implemented in hardware or in software.

Likewise, the term "securely obtaining" may refer to any act of obtaining that is performed such integrity protection is ensured, i.e., such that the respective information is safeguarded against tampering by the external devices.

In particular, deploying may comprise deploying the number of build artifacts on a same computing node of the industrial control system or may comprise orchestrating the number of build artifacts over a plurality of computing nodes of the industrial control system. More particularly, deploying may refer to the steps of providing the respective build artifact to the respective computing node, spawning the respective build artifact, setting up a physical or virtual network infrastructure to enable communications and interactions between the number of build artifacts, and the like.

In particular, the build ruleset may comprise one or more rules. A respective rule may specify a requirement that the respective build artifact must fulfil. Examples of requirements include requirements pertaining to process privileges, such as Linux "Capabilities", "Seccomp" profiles and the like, file system permissions, process group identifiers (GIDs), process user identifiers (UIDs), installed software packages, installed versions of software packages, repositories from which software packages originated, compiler flags that were set when compiling a software package, identities of developers that have created the source code, the build specification or the like.

In particular, the build validation result may thus comprise information about compliance or non-compliance of the build artifact with the requirements specified by the build ruleset.

Correspondingly, the deployment preparation ruleset may comprise one or more rules. A respective rule may specify a requirement that each build artifact and/or the corresponding build validation result must fulfil.

Thus, by providing the build ruleset, the deployment preparation ruleset, the trusted devices and a path for securely obtaining the build validation results in the deployment validating step and for securely obtaining the deployment validation results in the deployment step, the security-related measures to be implemented or not may be advantageously selected based on knowing which security-related measures were implemented, which security-related rules were obeyed or not in the previous build steps. Thus, security of the industrial control system may be advantageously improved in an efficient manner.

According to an embodiment, the deployment validation result comprises the build validation results or information derived from the build validation results of each of the build artifacts that form part of the deployment.

Thus, information on compliance or non-compliance may be passed from the build steps on to the deployment step along the entire CI/CD pipeline and may be utilized for selecting the proper security-related measures.

According to a further embodiment, the build validation result is transferred from the build step to the deployment preparation step in an integrity-protected manner and/or the deployment validation result is transferred from the deployment preparation step to the deployment step in an integrity-protected manner.

For example, a TSL-secured transmission channel may be used for said transmissions.

Thus, security is the industrial control system may be further improved.

According to a further embodiment, the respective build validation result is securely attached to the respective build artifact by means of an electronic signature and/or the deployment validation result is securely attached to the deployment specification by means of an electronic signature.

For example, public-private cryptography, certificate-based cryptography or the like may be used to create a respective electronic signature. Thus, the build validation result may be attached the build artifact and the resulting package may be signed electronically, and the deployment validation result may be attached to the deployment specification and the resulting package may be signed electronically. In this way, an integrity-protected manner of transferring the build validation result from the build step to the deployment preparation step and of transferring the deployment validation result from the deployment preparation step to the deployment step is provided. Furthermore, authenticity of the build validation results and of the deployment validation result is ensured. Furthermore, advantageously, no concurrent operation of the build, deployment preparation and deployment steps is required, and advantageously it is not require for all of the involved devices to be available online at the same time.

According to a further embodiment, the validating in the build step comprises: determining the build ruleset to be applied in consideration of the build specification and on digital artifacts referenced in the build specification.

A digital artifact referenced in the build specifications may be a compiled software package, a configuration file, a script, or another build artifact resulting from a previous build step, for example.

For example, a stricter ruleset may be selected for validating digital artifacts form untrusted repositories, while a less strict ruleset may be selected for validating digital artifacts from trusted repositories.

In this way, each build specification may be advantageously subjected to the proper requirements checks.

According to a further embodiment, the validating in the deployment preparation step comprises: determining the deployment preparation ruleset to be applied in consideration of the deployment specification, the build artifacts referenced in the deployment specification, and the build validation results associated therewith.

In this way, also the deployment specification may be advantageously subjected to the proper requirements checks depending on properties of the build artifacts it makes recourse to.

According to a further embodiment, the ruleset to be applied during the respective validating is determined in consideration of privileges of a user that is authenticated with the respective trusted device and has supplied the respective specification.

In this way, it is advantageously possible to properly treat built artifacts supplied by users of different levels of trust. For example, a lesser-trusted user may only be allowed to use digital artifacts having been created using fail-safe programming languages such as Python, Java, and the like, while a trusted user may also be allowed to use digital artifacts created with more powerful, but also more error-prone programming languages such as C, C++ and the like.

According to a further embodiment, the respective determining of the respective ruleset to be applied comprises determining a number of optional rules and a number of mandatory rules to be applied, and the respective validating comprises enforcing the number of mandatory rules.

For example, a rule may be determined to be optional when it is possible to implement a security-related measure that compensates for non-compliance with the rule. A rule may be determined to be mandatory when no security-related measure can be implemented to compensate non-compliance with the rule.

More particularly, enforcing a rule may comprise aborting the build step, the deployment preparation step or the deployment step with an error upon non-compliance with a mandatory rule.

Thus, the security can be further improved.

According to a further embodiment, the determining of the respective validation result comprises: determining the validating result based on compliance or non-compliances with the number of optional rules.

That is, it is advantageously possible to keep track of which of the optional rules where complied with and which not, for further use in the deployment step, via the build validation result and/or the deployment validation result that is securely transferred between the respective steps.

According to a further embodiment, the respective validating comprises: implementing a number of security-related measures depending on compliance or non-compliance with the respective ruleset.

That is, if non-compliance is found with one of the mandatory or optional rules, the non-compliance may be advantageously compensated for already in the build step or in the deployment preparation step. For example, as a security-related measure, a firewall configuration may be modified in the deployment specification, additional security-related digital artifacts, such as a security scanner, may be included into the build artifact or into the deployment specification, and the like.

According to a further embodiment, the respective validation result comprises one or more of: a trust score; an indication of the ruleset that was applied; a version of the ruleset that was applied; an indication of the rules of the ruleset for which compliance was determined; and an indication of a user that was authenticated with the respective trusted device and had supplied the respective specification.

That is, the respective validation result may not merely indicate compliance or non-compliance, but may convey additional information that may be advantageously levered to implement the correct security-related measures in the downstream steps.

According to a further embodiment, a respective one of the security-related measures implemented during the deployment comprises one or more of: defining a restart interval of the containerized application; rejecting deployment of the containerized application; enforcing use of a specific network policy or a specific service mesh; restricting process privileges of the containerized application; and enforcing deployment only on specific nodes of the industrial control system.

A network policy or service mesh may be advantageously deployed in the containerized runtime environment to restrict network communications of the components of the containerized application, i.e. of the build artifacts, on network and/or application layer.

In particular, some nodes of the industrial control system may comprise sandboxing or other security-enhancing functionalities. Build artifacts having a lesser trust score may be deployed to special nodes with security-enhancing functionality, while build artifacts with a higher trust score may be deployed to nodes without said security-enhancing functionality, thereby advantageously increasing, e.g., execution efficiency.

According to a further embodiment, the method further comprises operating the industrial control system by the deployed containerized application.

A respective entity that executes a respective one of the steps described hereinabove, such as the respective trusted device, may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

Any embodiment of the first aspect may be combined with any embodiment of the first aspect to obtain another embodiment of the first aspect.

According to a further aspect, the invention relates to a computer program product comprising a program code for executing the above-described method when run on at least one computing device.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

More particularly, the computer program product may comprise a first program code that executes the build step when run on a first trusted device, a second program code that executes the deployment preparation step when run on a second trusted device, and a third program code that executes the deployment step when run on an orchestration device.

According to a further aspect, the invention relates to a system for deploying a containerized application constituted by a number of build artifacts and a deployment specification comprising deployment information relating to the number of build artifacts to an industrial control system. The system comprises: a trusted build device configured to carry out, for each of the number of build artifacts, a build step comprising obtaining a build specification and building the build artifact according to the obtained build specification, and an orchestration device configured to perform a deployment step comprising obtaining the deployment specification and the number of build artifacts and deploying the number of artifacts in a containerized runtime environment of the industrial control system according to the deployment specification. Herein, the respective build step further comprises validating the build specification according to a build ruleset and determining a build validation result, the system further comprises a trusted deployment preparation device configured to perform a development preparation step comprising obtaining the deployment specification, obtaining the number of build artifacts and securely obtaining the build validation results, validating the deployment specification in consideration of the build artifacts and the build validation results according to a deployment preparation ruleset and determining a deployment validation result, and the deployment step further comprises implementing a number of security-related measures during deployment based on the deployment validation result.

The embodiments and features described with reference to the method of the present invention apply mutatis mutandis to the computer program product and to the system of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic diagram illustrating a system according to an exemplary embodiment;
- Fig. 2: shows a flow diagram illustrating a deployment method according to the exemplary embodiment;
- Fig. 3: shows constituent elements of a containerized appli-cation according to the exemplary embodiment; and
- Fig. 4: illustrates processing steps in a build step S1 according to preferred further developments in further detail.

In the Figures, like reference numerals designate like or functionally equivalent elements, unless otherwise indicated.

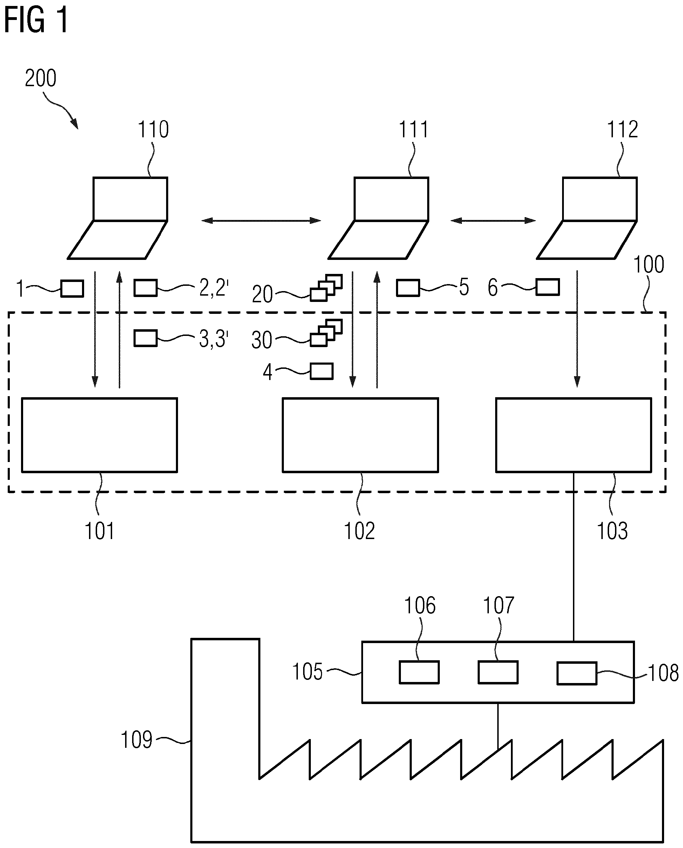

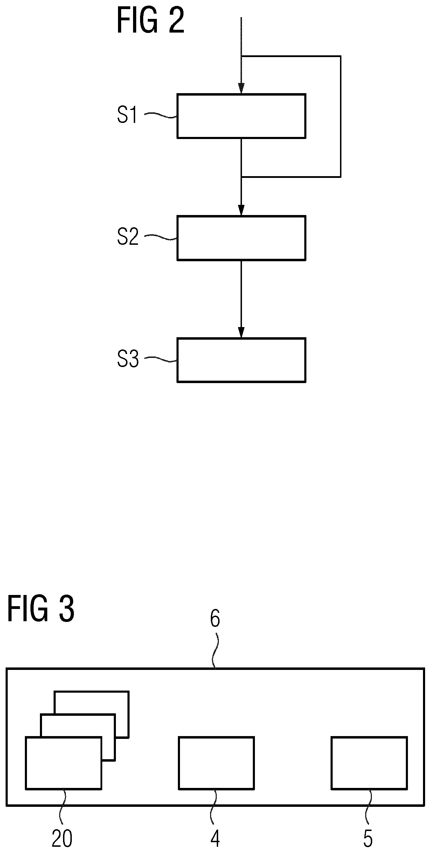

Fig. 1 shows a schematic diagram illustrating a system 200 according to an exemplary embodiment, and Fig. 2 shows a flow diagram illustrating a method according to the exemplary embodiment. Reference is made to Fig. 1 and Fig. 2.

System 100 (example of a system for deploying a containerized application to an industrial control system) comprises a first trusted device 101, a second trusted device 102 and an orchestration device 103. The orchestration device 103 is connected to an edge system 105 (example of an industrial control system) that comprises computing nodes 106, 107, 108, implements a containerized runtime engine, using, for example, Kubernetes, and is located at an edge of an industrial plant 109.

An external development device 110 is connected to the first trusted device 101, an external development device 111 is connected to the second trusted device 102, and an external device 112 is connected to the orchestration device 103.

The system 100, the edge system 105, external development devices 110, 111, external device 112 and the steps discussed hereinbelow together constitute a continuous integration continuous development, CI/CD, pipeline 200.

Step S1 of the CI/CD method (example of a method for deploying a containerized application to an industrial control system) is a build step in which a developer using an external development device 110 provides a build specification 1 to the first trusted device 101 of system 100.

The build specification 1 may reference a number of digital artifacts (not shown) to be used in the build step, such as for example compiled software packages, other build artifacts, scripts, configuration files, and the like, and may comprise instructions on how to combine the number of digital artifacts to build the build artifact 2.

At the beginning of build step S1, the trusted device 101 validates the build specification 2 according to a build ruleset 121 and generates a validation result 3. The trusted device 101 then proceeds to build the build artifact 2, from the digital artifacts referenced by the build specification 1, according to the instructions comprised in the build specification 1. Herein, the trusted device 101 may pull the digital artifacts referenced in the build specification 2 form an external source (not shown), such as a code repository or the like, or those digital artifacts may be provided to the trusted device 101 from the external development device 110 together with the build specification 1. Then, the trusted device 101 provides the build artifact 2 and the validation result 3 back to the external development device 110.

Step S1 may be repeated at the same or at different times by the same or different developers for all build artifacts 2, 20 that constitute a part of the containerized application 6 to be built. Therein, it may be conceivable that some build artifact 2 that was provided as output from the trusted device 101 in one build step S1 is used at a later time as an input digital artifact that is used for building a further build artifact 2' in another one of the build steps S1.

Step S2 of the CI/CD method is a deployment preparation step. A developer using an external development device 111 provides a plurality of build artifacts 20 and the associated build validation results 30 (both of which have been previously obtained by executions of steps S1), and a deployment specification 4, to the trusted device 102.

The deployment specification 4 lists, for example, the build artifacts 20 to be deployed, resources, such as CPU time, memory and storage, to be provided for each of the build artifacts 20, a network topology to be established between the deployed build artifacts 20, and the like.

Thereupon, the trusted device 102 validates the deployment specification 2 according to a deployment preparation ruleset 122 and generates a deployment validation result 5. The trusted device 102 provides the deployment validation result 5 back to the external development device 111.

Step S3 of the CI/CD method is a deployment step. An operator using an external device 112 provides the containerized application 6 to the orchestration device 103. As shown in Fig. 3, with further reference to Figs 1 and 2, the containerized application 6 is constituted by the same build artifacts 20 and deployment specification 4 that were provided to the deployment preparation device 102. In this example, the containerized application 6 also comprises the deployment validation result 5.

In step S3, the orchestration device 103 identifies security-related measures to be implemented dependent on the deployment validation result 6. The orchestration device 103 implements the identified security-related measures and deploys the containerized application 6, or, more specifically, the build artifacts 20, to one or more of computing nodes 106-108 of edge system 105 in accordance with the deployment specification 4.

It is noted that according to one variant, the deployment validation result 6 may comprise the build validation results 30 that correspond to the build artifacts 20. According to another variant, the deployment validation result 6 comprises information derived from these build validation results 30. For example, a trust score comprised in the deployment validation result 6 may depend on trust scores comprised in the build validation results 30, and can therefore be described as "information derived from the build validation results 30".

Thus, the exemplary embodiment provides for tracking of at least some of the information contained in the validation results 3, 30, 5 over all steps S1-S3 throughout the entire CI/CD pipeline 2000. In each next step S2, S3, a security-related measure can be implemented based on the validation results 3, 30, 5 of the previous steps S1, S2. More particularly, the orchestration device 100 can decide, based on the deployment validation result 5, which security-related measures must be applied and which security-related measures can be omitted. In this way, advantageously, efficiency may be improved by omitting over-provisioning of unnecessary security-related measures, while security of the edge system 105 may be improved by implementing beneficial security-related measures in view of the deployment validation result 6.

Preferred further developments and configurations are discussed hereinbelow. Each of the below-described preferred further developments and configurations, as identified by terminology such as "preferably", "according to a further development", "optional", "example", and the like, can be combined with the above-described first exemplary embodiment and/or any of the other preferred further developments and configurations, as long as no contradictions arise.

In Fig. 1, the system 100 constitutes a trusted domain, while the external development devices 110, 111, 112 constitute an untrusted or lesser-trusted domain. According to one preferred further development, the devices 101-103 of the trusted domain 100 are operated by a trusted entity that provides security guarantees, such as an IT security department or an operator of an "industrial control app store". The external development and orchestration devices 110, 111 are operated by a software development team. The orchestration device 112 is operated by an owner of the industrial plant 109.

Conventional smartphone app stores are monolithic solutions, in which an application is certified by a reviewing body and can then be downloaded and used by a smartphone user, who runs the app in a full sandbox.

In contrast thereto, an industrial "control app store" of the present preferred further development provides for more flexibility. Different parties (different users of different external devices 110-112) can contribute to the building of a containerized application 6, build upon the work results of each other. Upon deployment and orchestration, the security-measures to be applied (such as sandboxing, firewalling, security scanning, monitoring etc.) are automatically adjusted based on the characteristics of the individual digital artifacts and build artifacts 20 that have contributed to the containerized application 6. The system 100 takes care of making these characteristics available at the time of deployment.

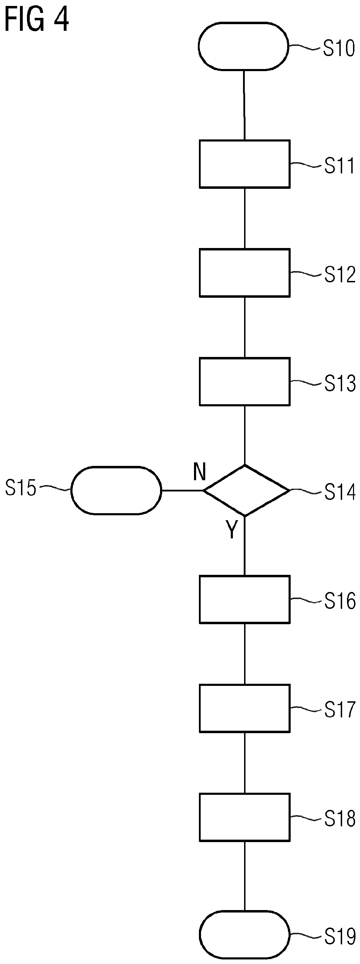

Fig. 4 illustrates processing steps in the build step S1 (Fig. 2) according to preferred further developments in further detail. Reference is made to Fig. 1, Fig. 2 and Fig. 4.

The build step S1 starts at S10.

After that, in step S11 - which is an optional, put preferable step - a user of the external development apparatus 110 authenticates with the trusted device 101. During authentication, a user identity of the user is established.

In step S12, the build specification 1 and any digital artifacts referenced therein are validated by an image build checker (not shown). The image build checker may check where the referenced digital artifacts originate, whether and by whom they are digitally signed, whether their digital signature is valid, what user has authenticated in step S11, what privileges this user enjoys, and the like. Based on these findings, the image build checker selects one of a plurality of build rulesets to become the build ruleset 121 against which the build specification 1 is to be checked.

Furthermore, preferably, the image build checker classifies the rules of the build specification 1 into mandatory and optional rules. For example, if the user that authenticated in step S11 is trusted, or the repositories from which the digital artifacts originated are trusted, some rules may be classified as optional or may be omitted.

Preferably, it is conceivable that a digital artifact referenced in build specification 1 is a build artifact 2' that has been built by a previous execution of build step S1. In this case, preferably, a build validation result 3' that was generated for the build artifact 2' that is the digital artifact is also provided to the trusted device 101 and is also checked by the image build checker. For example, if all digital artifacts referenced by the build specification 1 are such previous build artifacts 2' that have an associated validation result 3' that indicates that certain rules have already been validated and compliance was found, the image checker may remove the corresponding rules from the build ruleset 121 and/or may classify them as optional, thereby preventing unnecessary checking and/or overprovisioning.

In step S13, the selected build ruleset 121 is applied. For each of the rules of the ruleset 121, compliance or non-compliance of the build specification 1 and any digital artifacts referenced therein with the respective rule is determined.

According to one preferred further development, each of the rules of the build ruleset 121 specifies a validation of one or more of the following aspects of the build specification 1 or the digital artifacts references thereby: what functionality is comprised in the build artifact 2, processes are to be executed in the build artifact 2, under which UIDs these processes are to be executed, with what privileges these processes are to be executed, which compilation flags were used to compile the corresponding binary packages (digital artifacts), from what repository was the source code for compiling the binary packages taken, what signatures were provided on source code and/or binary packages, information on validity of said signatures, and the like.

According to one preferred development, the rules of the build ruleset 121 may be, for example, Open Policy Agent rules written in the high-level declarative language Rego.

In step S14, it is decided whether compliance with all of the mandatory rules is found. If not (N), the build step is aborted with an error, S15. Thus, compliance with the mandatory rules is enforced.

Otherwise (Y), in step S16, the validation result 3 is generated. The validation result comprises a trust score that is computed such that it is indicative for the amount and importance of the optional rules that are complied with or that are not complied with. As such, the trust score is a measure that classifies the trustworthiness of the build artifact 2 to be built.

Preferably, further information that further classifies the build artifact 2 may be included into the validation result 3. For example, the validation result 3 may also comprise an indication of the build ruleset 122 that was selected and applied, such as an identifier and/or a revision number of the ruleset 121. The validation result 3 may also comprise information on each individual rule that was applied, such as the respective rule itself or a hash value or other identifier of the respective rule, and information on the outcome of the application of each rule, such as compliance or non-compliance.

As such, the build validation result 3 that is generated in step S6 may be described as a classification of the build artifact 2 to be built in view of the security-related aspects covered by the build ruleset 121. The build validation result 3 can therefore advantageously be used as a basis for validation or deciding on necessary security-related measures in further steps, such as another build step S1, the deployment preparation step S2, and/or the deployment step S3.

It is noted use of the rules of the build ruleset 121 is not restricted to merely determining the build validation result 3. According to one preferred development, the rules of the build ruleset 121 can also be used to cause implementation of a security-related measure at build stage during build step S1. That is, if non-compliance with one of the mandatory or optional rules of the build ruleset 121 is found, a rule may cause a security-related measured to be implemented at build stage. Merely as an example, if the build specification 1 references a digital artifact that provides an internet-accessible service, but does not specify any digital artifact that provides for a security scanning functionality, a rule may cause a further predefined digital artifact that comprises a security scanning functionality to be acquired and included into the build artifact 2 during building.

In step S17, the build image 2 is built according to the build specification 1.

In optional, but preferable, step S18, the build validation result 3 and the build artifact 2 are bundled into a package and secured with a digital signature for integrity-protection to prevent tampering while the build artifact 2 and the build validation result 3 are being handled, stored and exchanged between the external development devices 110, 111, 112. Thus, the build artifact 2 and the validation result 3 are provided back to the external development device 110 as a signed bundled package, and the build step S1 ends at S19.

According to one preferred further development, the details of the deployment preparation step S2 according to the present preferred development are similar to the details of the build step S1 described with reference to Fig. 4, and only differences are now discussed briefly.

That is, also in the deployment preparation step S3, one of a plurality of deployment preparation rulesets may be selected as the deployment preparation ruleset 122, and rules of the deployment preparation ruleset 122 may be classified as being mandatory or optional, in consideration of an authenticated user and/or the build validation results 30 of the build artifacts 20. Also in the develop preparation step S2, the rules may be, as one example, Open Policy Agent rules written in the high-level declarative language Rego.

It is pointed out that the build artifacts 20 themselves are binary files that often do not convey all requried security-related information or may not convey part or all of said information in a form that can be suitably validated by the deployment preparation ruleset 122. However, according to the present preferred further development, information that is relevant for classifying the build artifacts 20 is advantageously retained in the build validation results 30, which are being made available to the trusted device 102 that carries out the deployment preparation step S2.

Similar to the build step S1, also in the deployment preparation step S2, the deployment validation result 5 may comprise a trust score, information on which rules of the deployment ruleset 122 were applied or omitted, information on the compliance or non-compliance with the rules of the deployment preparation ruleset 122, and the like.

Also in the deployment preparation step S2, it is conceivable that a rule of the deployment preparation ruleset 122 specifies, in response to non-compliance with the rule, implementation of a security-related measure. In this case, for example, if non-compliance is found, the rule may cause the trusted device 102 to amend the deployment specification 4 so as to include a further build artifact 30 that includes security-related functionality that was found to be missing.

Furthermore, preferably, the deployment validation result 5 is bundled with the deployment specification 4 into a package and secured with a digital signature to prevent tampering with the deployment specification 4 and the corresponding deployment validation result 5. The digitally signed package is provided back to the external development apparatus 111, and the deployment preparation step S2 ends.

According to a preferred further development, similarly to the previous steps, the deployment step S3 also employs a deployment ruleset 123 to make the decision as to what security-related measures to implement. The deployment ruleset 123 to be used may be selected depening on an identiy of a user of the external device 112 that has authenticated with the deployment device 103 of the trusted domain 100. Herein, the deployment validation result 5 advantageously conveys information that enables the use of a deployment ruleset 123 for classification of security-related aspects that have arisen throughout the entire CI/CD pipeline 200. By applying the rules of the deployment ruleset 123, it is advantageously possible to derive proper security-related measures.

According to a preferred further development, security-related measures that can be implemented by the orchestration device 103 in deployment step S3 based on the deployment ruleset 123 may include one or more of: defining a restart interval of the containerized application 6; rejecting deployment of the containerized application 6, in which case step S3 is aborted with an error to enforce a mandatory rule; enforcing use of a specific network policy or a specific service mesh for communication between the build artifacts 20 of the containerized application 6; restricting process privileges of the containerized application 6; enforcing deployment of certain build artifacts 20 or of the entire containerized application 6 only on specific ones of the computing nodes 106, 107, 108 of the edge system 105. Specific nodes 106-108 that may be chosen for deployment may be nodes with extended security functionalities, such as sandboxing, extended monitoring, security scanning, or other specific security tools, if a corresponding need arises based on the classification performed using the deployment ruleset 123.

According to the exemplary embodiment and its preferred developments, when the deployment step S3 is completed, the containerized application 5 is deployed to the industrial control system 105. That is, the containerized application 5 is then being executed by the edge system 105 and is thus operating (or is at least contributing to operation of) the edge system 105 and the industrial plant 109 connected thereto.

Thus, advantageously, security of operation of the industrial plant 109 can be efficiently enhanced with suitable security-related measures while avoiding over-provisioning.

Although the present invention has been described in accordance with preferred embodiments, it is obvious for the person skilled in the art that modifications are possible in all embodiments.

In the exemplary embodiment, digital signatures are used for integrity protecting, and ensuring authenticity of, the build validation results 3 and the deployment validation result 5 while they are being handled in the lesser-trusted domain comprising devices 110, 111, 112.

However, other means for integrity-protecting and ensuring authenticity of the build validation result 3 and the deployment validation result 5 are conceivable. In one modification, the build validation result 3 further comprises a hash value of the build artifact 2, and the deployment validation result 5 further comprises a hash value of the deployment specification 4, and the containerized application 5 does not comprise the deployment validation result 5. The build validation result 3 and the deployment validation result 5 are not provided back to the devices 110, 111, 112 of the lesser-trusted domain. Rather, the build and deployment validation results 3, 5 that comprise the hash values are stored in a database that is hosted inside the system 100. When the second trusted device 102 is instructed to validate the deployment specification 4, no build validation results are provided to the second trusted device 102. Instead, the second trusted device 102 calculates the hash value of each of the build artifacts 20 that are provided to it, and obtains the build validation results 30 that corresponds to the build artifacts 20 from the database of system 100 based on the calculated hash values. Similarly, when the orchestration device 103 is instructed to orchestrate the containerized application 5 that does not comprise the deployment validation result 5, the orchestration device 103 calculates the hash value of the provided deployment specification 4 and obtains the deployment validation result 5 from the database of system 100 based on the calculate hash value. In this way, transfer of the validation results 3 and 5 is integrity-protected, and the authenticity of validation results 3 and 5 is ensured, without requiring the use of electronic signatures. According to the present modification, the validation results 3 and 5 stay inside the trusted domain 100 at all times.

## Claims

1. A method for deploying a containerized application (6) constituted by a number of build artifacts (20) and a deployment specification (4) comprising deployment information relating to the number of build artifacts (20) to an industrial control system (105), comprising:
a build step (S1) carried out for each of the number of build artifacts (20) and comprising obtaining a build specification (1) and building the build artifact (2) according to the obtained build specification (1); and
a deployment step (S3) comprising obtaining the deployment specification (4) and the number of build artifacts (20) and deploying the number of build artifacts (20) in a containerized runtime environment of the industrial control system (105) according to the deployment specification (4), wherein
the respective build step (S1) is carried out by a trusted device (101) and further comprises validating the build specification (1) according to a build ruleset (121) and determining a build validation result (3, 30),
the method further comprises a deployment preparation step (S2) that is carried out by a trusted device (102) and comprises obtaining the deployment specification (4), obtaining the number of build artifacts (20) and securely obtaining the build validation results (30), validating the deployment specification (4) in consideration of the build artifacts (20) and the build validation results (30) according to a deployment preparation ruleset (122) and determining a deployment validation result (5), and
the deployment step (S3) further comprises implementing a number of security-related measures during deployment based on the deployment validation result (5).

2. The method of any claim 1,
wherein the deployment validation result (5) comprises the build validation results (30) or information derived from the build validation results (30) of each of the build artifacts (20) that form part of the deployment.

3. The method of claim 1 or 2,
wherein the build validation result (3, 30) is transferred from the build step (S1) to the deployment preparation step (S2) in an integrity-protected manner and/or the deployment validation result (5) is transferred from the deployment preparation step (S2) to the deployment step (S3) in an integrity-protected manner.

4. The method of any of claims 1 - 3,
wherein the respective build validation result (3) is securely attached to the respective build artifact (2) by means of an electronic signature and/or the deployment validation result (5) is securely attached to the deployment specification (4) by means of an electronic signature.

5. The method of any of claims 1 - 4,
wherein the validating in the build step (S1) comprises: determining the build ruleset (121) to be applied in consideration of the build specification (1) and on digital artifacts referenced in the build specification (1).

6. The method of any of claims 1 - 5,
wherein the validating in the deployment preparation step (S2) comprises:
determining the deployment preparation ruleset (122) to be applied in consideration of the deployment specification (4), the build artifacts (20) referenced in the deployment specification (4), and the build validation results (30) associated therewith.

7. The method of any of claims 1 - 6,
wherein the ruleset (121, 122) to be applied during the respective validating is determined in consideration of privileges of a user that is authenticated with the respective trusted device (101, 102) and has supplied the respective specification (1, 4).

8. The method of any of claims 5 - 7,
wherein the respective determining of the respective ruleset (121, 122) to be applied comprises determining a number of optional rules and a number of mandatory rules to be applied, and the respective validating comprises enforcing the number of mandatory rules.

9. The method of claim 8,
wherein the determining of the respective validation result (3, 5) comprises:
determining the validating result (3, 5) based on compliance or non-compliances with the number of optional rules.

10. The method of any of claims 1 - 9,
wherein the respective validating comprises:
implementing a number of security-related measures depending on compliance or non-compliance with the respective ruleset (121, 122).

11. The method of any of claims 1 - 10,
wherein the respective validation result (3, 5) comprises one or more of: a trust score; an indication of the ruleset (121, 122) that was applied; a version of the ruleset (121, 122) that was applied; an indication of the rules of the ruleset (121, 122) for which compliance was determined; and an indication of a user that was authenticated with the respective trusted device (101, 102) and had supplied the respective specification (1, 4).

12. The method of any of claims 1 - 11,
wherein a respective one of the security-related measures implemented during the deployment (S3) comprises one or more of: defining a restart interval of the containerized application (6); rejecting deployment of the containerized application (6); enforcing use of a specific network policy or a specific service mesh; restricting process privileges of the containerized application (6); and enforcing deployment only on specific nodes (106-108) of the industrial control system (105).

13. The method of any of claims 1 - 12,
wherein the method further comprises operating the industrial control system (109) by the deployed containerized application (6).

14. A computer program product comprising a program code for executing the method of any of claims 1 to 13 when run on at least one computing device (101, 102, 103).

15. A system (100) for deploying a containerized application (6) constituted by a number of build artifacts (20) and a deployment specification (4) comprising deployment information relating to the number of build artifacts (20) to an industrial control system (105), the system (100) comprising:
a trusted build device (101) configured to carry out, for each of the number of build artifacts (20), a build step (S1) comprising obtaining a build specification (1) and building the build artifact (2) according to the obtained build specification (1), and
an orchestration device (103) configured to perform a deployment step (S3) comprising obtaining the deployment specification (4) and the number of build artifacts (20) and deploying the number of build artifacts (20) in a containerized runtime environment of the industrial control system (105) according to the deployment specification (4), wherein
the respective build step (S1) further comprises validating the build specification (1) according to a build ruleset (121) and determining a build validation result (3, 30),
the system (100) further comprises a trusted deployment preparation device (102) configured to perform a development preparation step (S2) comprising obtaining the deployment specification (4), obtaining the number of build artifacts (20) and securely obtaining the build validation results (30), validating the deployment specification (4) in consideration of the build artifacts (20) and the build validation results (30) according to a deployment preparation ruleset (122) and determining a deployment validation result (5), and
the deployment step (S3) further comprises implementing a number of security-related measures during deployment based on the deployment validation result (5).
